(19) Europäisches Patentamt / European Patent Office / Office européen des brevets

(11) **EP 4 489 132 A1**

(12) **EUROPEAN PATENT APPLICATION**
published in accordance with Art. 153(4) EPC

(43) Date of publication:
**08.01.2025 Bulletin 2025/02**

(21) Application number: **23785047.4**

(22) Date of filing: **07.04.2023**

(51) International Patent Classification (IPC):
$H01M\ 4/525^{(2010.01)}$     $H01M\ 4/505^{(2010.01)}$
$C01G\ 53/00^{(2006.01)}$     $H01M\ 10/052^{(2010.01)}$
$H01M\ 4/02^{(2006.01)}$

(52) Cooperative Patent Classification (CPC):
**C01G 53/00; H01M 4/02; H01M 4/505; H01M 4/525; H01M 10/052; Y02E 60/10**

(86) International application number:
**PCT/KR2023/004752**

(87) International publication number:
**WO 2023/195823 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.04.2022 KR 20220043660**

(71) Applicant: **LG Energy Solution, Ltd.**
**Seoul 07335 (KR)**

(72) Inventors:
- **KIM, Gun Woo**
  **Daejeon 34122 (KR)**
- **PARK, Cheol Hee**
  **Daejeon 34122 (KR)**
- **HUR, Hyuck**
  **Daejeon 34122 (KR)**
- **BAEK, So Ra**
  **Daejeon 34122 (KR)**
- **KIM, Dong Hwi**
  **Daejeon 34122 (KR)**
- **PARK, Kang Joon**
  **Daejeon 34122 (KR)**
- **JUNG, Wang Mo**
  **Daejeon 34122 (KR)**
- **PARK, Sin Young**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, POSITIVE ELECTRODE INCLUDING SAME, AND LITHIUM SECONDARY BATTERY**

(57)     The present invention pertains to: a positive electrode active material including a lithium complex metal oxide containing nickel, cobalt, manganese, and aluminum; a positive electrode including same; and a lithium secondary battery. The positive electrode active material contains 85-97 mol% of nickel and 2-5 mol% of cobalt on the basis of the total number of moles of metals other than lithium and satisfies expression (1) below. Expression (1): $0.25 \leq I_{550}/I_{700} \leq 0.4$. In expression (1), $I_{700}$ and $I_{550}$ are the maximum peak intensity values in the 600-800 ppm region and the 450-650 ppm region, respectively, as analyzed by peak deconvolution of 1D NMR center band spectrum extracted from 2D $^{7}$Li Magic Angle Turning Phase Adjusted Spinning Sideband (MATPASS) NMR spectrum of the positive electrode active material.

[FIG. 1]

EP 4 489 132 A1

## Description

## TECHNICAL FIELD

This application claims priority from Korean Patent Application No.10-2022-0043660, filed on April 7, 2022, the disclosure of which is incorporated by reference herein.

The present invention relates to a positive electrode active material, and a positive electrode and a lithium secondary battery including the same, and more particularly, to a positive electrode active material having improved lifespan characteristics, and a positive electrode and a lithium secondary battery including the same.

## BACKGROUND ART

A lithium secondary battery is generally composed of a positive electrode, a negative electrode, a separator, and an electrolyte, and the positive electrode and the negative electrode include active materials capable of intercalating and deintercalating lithium ions.

Lithium cobalt oxide ($LiCoO_2$), lithium nickel oxide ($LiNiO_2$), lithium manganese oxide ($LiMnO_2$, $LiMn_2O_4$ or the like), a lithium iron phosphate compound ($LiFePO_4$), or the like has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient lifespan characteristics. Meanwhile, the lithium manganese oxide has excellent stability, but is disadvantageous in that capacity characteristics are inferior. Accordingly, lithium composite transition metal oxides containing two or more types of transition metals have been developed to remedy the disadvantages of the lithium transition metal oxides containing nickel (Ni), cobalt (Co),or manganese (Mn) alone, and, among them, a lithium nickel cobalt manganese oxide containing Ni, Co, and Mn has been widely used in the field of electric vehicle batteries.

Recently, demands for high-output and high-capacity batteries, such as batteries for electric vehicles, are increasing, and, accordingly, a nickel content in a positive electrode active material tends to gradually increase. The increased nickel content in the positive electrode active material improves capacity characteristics, but causes a large amount of highly reactive $Ni^{4+}$ ions to be generated during repeated charge and discharge, so that structural collapse of the positive electrode active material occurs, and, as a result, there is a problem in that degradation rate of the positive electrode active material is increased to deteriorate lifespan characteristics.

Therefore, there is a demand for the development of a positive electrode active material that can ensure excellent lifespan characteristics while containing an excessive amount of nickel to achieve high capacity.

## DISCLOSURE OF THE INVENTION

### TECHNICAL PROBLEM

An aspect of the present invention provides a positive electrode active material which achieves long-lifespan characteristics due to excellent structural stability and in which a molar ratio of Ni in the total metals other than lithium is 85 mol% or more, and a positive electrode and a lithium secondary battery including the positive electrode active material.

## TECHNICAL SOLUTION

According to an embodiment, the present invention provides a positive electrode active material including a lithium composite metal oxide which includes nickel, cobalt, manganese, and aluminum, and the positive electrode active material includes 85 mol% to 97 mol% of nickel, preferably 85 mol% to 95 mol% of nickel, more preferably 90 mol% to 95 mol% of nickel, and 2 mol% to 5 mol% of cobalt, with respect to the total number of moles of metals other than lithium, and satisfies Expression (1) below.

$$\text{Expression (1): } 0.25 \leq I_{550}/I_{700} \leq 0.4$$

where, in Expression (1), $I_{700}$ and $I_{550}$ are respectively a maximum value of a peak intensity appearing in a range of 600 ppm to 800 ppm and a maximum value of a peak intensity appearing in a range of 450 ppm to 650 ppm when a spectral analysis(peak deconvolution) is performed on a 1D NMR center band spectrum extracted from a 2D $^7$Li Magic Angle Turning Phase Adjusted Spinning Side band (MATPASS) NMR spectrum for the positive electrode active material.

Meanwhile, a 1D NMR center band spectrum extracted from a 2D $^7$Li MATPASS NMR spectrum for the positive electrode active material has a first peak appearing in a range of 550 ppm to 850 ppm, and a second peak appearing in a range of -10 ppm to 10 ppm.

Preferably, the positive electrode active material according to the present invention may satisfy Expression (1-1) below.

$$\text{Expression (1-1): } 0.25 \leq I_{550}/I_{700} \leq 0.4$$

In Expression (1-1), $I_{700}$ and $I_{550}$ are the same as those defined in Expression (1).

Meanwhile, it is preferable that a full width at half maximum ($FWHM_{700}$) of the peak appearing in the range of 600 ppm to 800 ppm is 250 ppm or less, a full width at half maximum ($FWHM_{550}$) of the peak appearing in the range of 450 ppm to 650 ppm is 250 ppm or less, and a full width at half maximum ($FWHM_{0}$) of the peak appearing in the range of -10 ppm to 10 ppm is 50 ppm or less when a spectral analysis (peak deconvolution) is performed on a 1D NMR center band spectrum extracted from a 2D $^7$Li Magic Angle Turning Phase Adjusted Spinning Sideband (MATPASS).

In addition, the positive electrode active material may include 0.5 mol% or more, and less than 5 mol% of manganese, and 0.5 mol% or more, and less than 5 mol% of aluminum, and specifically, have a composition represented by [Formula 1] below.

[Formula 1] $\quad\quad Li_aNi_bCo_cMn_dAl_eM^1_fO_2$

where, in [Formula 1], $M^1$ is at least one selected from the group consisting of Zr, W, Y, Ba, Ca, Ti, Mg, Ta, and Nb, and $0.8 \leq a \leq 1.2$, $0.85 \leq b \leq 0.97$, $0.02 < c \leq 0.05$, $0.005 \leq d < 0.05$, $0.005 \leq e < 0.05$, and $0 \leq f \leq 0.02$ are satisfied.

According to another embodiment, the present invention provides a method of preparing a positive electrode active material including a first step of performing a co-precipitation reaction on a transition metal aqueous solution containing nickel ions, cobalt ions, and manganese ions to form a precursor, a second step of mixing the precursor, a lithium raw material, and an aluminum raw material, and then calcining the resultant mixture to form a lithium composite metal oxide, and a third step of mixing the lithium composite transition metal oxide, and a cobalt raw material and then performing a heat treatment to prepare a positive electrode active material.

A ratio of number of moles of cobalt included in the cobalt raw material in the third step to number of moles of cobalt included in the precursor in the first step may be 1 to 1.5.

A heat treatment temperature in the third step may be 600 °C to 750 °C.

According to another embodiment, the present invention provides a positive electrode including the positive electrode active material according to the present invention, and a lithium secondary battery including the positive electrode.

## ADVANTAGEOUS EFFECTS

A positive electrode active material according to the present invention essentially includes Ni, Co, Mn, and Al, wherein an amount of nickel (Ni) is 85 mol% to 97 mol%, an amount of cobalt (Co) is 2 mol% to 5 mol%, and a ratio of a maximum value $I_{550}$ of a peak intensity appearing in a range of 450 ppm to 650 ppm to a maximum value $I_{700}$ of a peak intensity appearing in a range of 600 ppm to 800 ppm satisfies 0.25 to 0.4 when a spectral analysis is performed on a 1D NMR center band spectrum extracted from an NMR spectrum obtained by a 2D $^7$Li Magic Angle Turning Phase Adjusted Spinning Sideband (MATPASS) analysis method.

When Ni is included in a large amount of 85 mol% or more, there is an advantage in that high-energy density can be achieved, but there is a disadvantage in that side reaction with an electrolyte solution increases due to an increase of highly reactive $Ni^{4+}$ on a surface of the positive electrode active material, and structural stability decreases, resulting in rapid deterioration of lifespan characteristics. However, as in the present invention, when a specific amount of Co is included, and the peak characteristics of an NMR spectrum satisfy Expression (1) above, excellent lifespan characteristics may be achieved even if a high concentration of Ni is included. Therefore, when using the positive electrode active material according to the present invention, a lithium secondary battery having high capacity and excellent lifespan characteristics may be achieved.

## BRIEF DESCRIPTION OF THE DRAWINGS

FIG. 1 is a view showing 1D NMR center band spectra extracted from NMR spectra obtained by analyzing, with the 2D $^7$Li MATPASS NMR analysis method, positive electrode active materials prepared according to Examples 1 and 2 and Comparative Examples 1 and 2.

FIG. 2 is a view showing NMR spectra obtained by analyzing, with the 1D Hahn-echo MAS NMR analysis method, the positive electrode active materials prepared according to Example 1 and Comparative Example 1.

FIG.3 is a view showing spectral analysis results of a 1D NMR center band spectrum extracted from 2D $^7$Li MATPASS NMR spectrum of the positive electrode active material according to Example 1.

FIG. 4 is a graph showing lifespan characteristics of lithium secondary batteries using the positive electrode active materials according to Examples 1 and 2, and Comparative Examples 1 and 2.

## MODE FOR CARRYING OUT THE INVENTION

Hereinafter, the present invention will be described in more detail.

## Positive Electrode Active Material

As a result of repeating research for improving lifespan characteristics of a high-nickel-based positive electrode active material including 85 mol% or more of Ni, the present inventors have found that, when a ratio of a coordinating metal surrounding a lithium element is properly adjusted while a cobalt content in the positive electrode active material falls within a range of 2 to 5 mol%, the lifespan characteristics of the high-nickel-based positive electrode active material are significantly improved, and have completed the present invention.

Specifically, a positive electrode active material according to the present invention includes a lithium composite metal oxide which includes nickel, cobalt, manganese, and aluminum, wherein an amount of nickel is 85 mol% to 97 mol%, and an amount of cobalt is 2 mol% to 5 mol%, with respect to the total number of moles of metals other than lithium in the positive electrode active material, and Expression (1) below is satisfied.

$$\text{Expression (1): } 0.25 \leq I_{550}/I_{700} \leq 0.4$$

where, in Expression (1), $I_{700}$ and $I_{550}$ are respectively a maximum value of a peak intensity appearing in a range of 600 ppm to 800 ppm and a maximum value of a peak intensity appearing in a range of 450 ppm to 650 ppm when a spectral analysis (peak deconvolution) is performed on a 1D NMR center band spectrum extracted from a 2D $^7$Li Magic Angle Turning Phase Adjusted Spinning Sideband (MATPASS) NMR spectrum for the positive electrode active material.

Measurement conditions of 2D $^7$Li MATPASS NMR in the present invention are as follows.

<Measurement conditions>

Solid 400 MHz WB (wide bore) NMR system
MAS (magic angle spinning) rate: 55 kHz
Spectral frequency (sfo1): 155.62 MHz($^7$Li)
Temperature: ambient temperature
$^7$Li Chemical shift reference: secondary LiF(s)reference at -1 ppm
Pulse program: 2D MATPASS
Spectral width(sw): 1250 kHz
Acquisition time: 5 ms
Carrier frequency (olp) at 500 ppm
Pulse length (p1): 1μs
Recycle delay(d1):35 ms
TD of F1 dimension(L1): 8
Number of scans :30000

After measurements, 2D data was processed by xfb and then a 5th slice was extracted from among the obtained eight 1D NMR spectra to obtain a 1D NMR center band spectrum((L1/2+1)=(8/2 +1)=5th slice).

Meanwhile, a spectral analysis (peak deconvolution) may be performed on the 1D NMR center band spectrum extracted from the 2D 7Li MATPASS (Magic Angle Turning Phase Adjusted Spinning Sideband) NMR spectrum by using the DMFIT (64bit, release #20190125) NMR software. Specifically, the spectral analysis may be performed by importing the 1D NMR center band spectrum extracted from the $^7$Li MATPASS NMR spectrum into the DMFIT software, then selecting Gaussian/Lorentzian as a fitting model for a spectral analysis, setting appropriate initial values for an amplitude, a peak position, a peak width, and a Gaussian/Lorentzian fraction (xG/(1-x)L), and then repeatedly performing fitting until an appropriate convergence value is reached. In the present invention, in a spectral analysis, Gaussian/Lorentzian fraction (xG/(1-x)L) is fixed at 0.5, and fitting is performed under the conditions of nParVar=15, step=1, and Thresh=0.001.

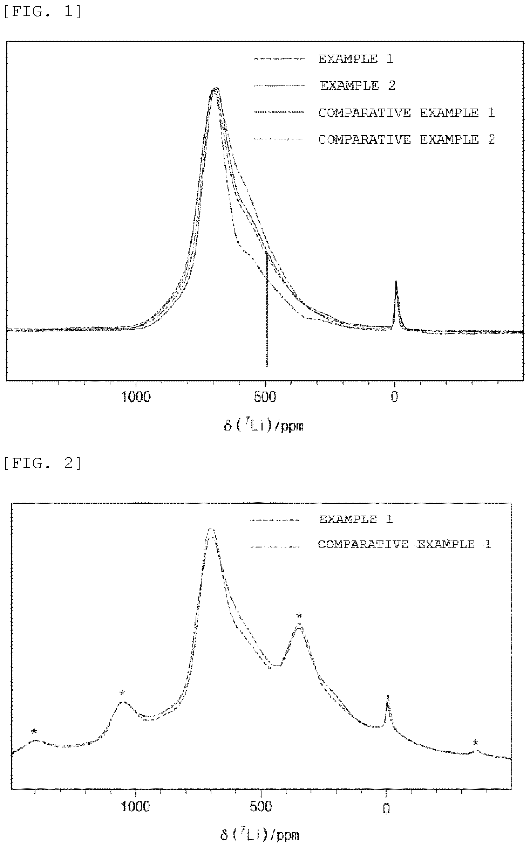

Conventionally, one dimensional (1D) solid-state $^7$Li NMR analysis method has been mainly used for a structural analysis of a positive electrode active material. However, when measuring a high-nickel positive electrode active material containing an excessive amount of Ni, which is a paramagnetic metal, through the 1D solid-state $^7$Li NMR analysis method, an NMR resolution becomes poorer due to a paramagnetic effect, a phasing error occurs due to overlap between a spinning sideband and a main peak, thus making it difficult to analyze the structural characteristics of the positive electrode active material(see FIG. 2).

However, when using the 2D $^7$Li MATPASS NMR analysis method, an NMR spectrum having a high resolution may be obtained, and the structural characteristics of the positive electrode active material may be identified through a spectral analysis of the extracted spectrum. As a result of analyzing various positive electrode active materials through the 2D $^7$Li MATPASS NMR analysis method, the present inventors have found that a positive electrode active material formed such that the NMR spectrum satisfies Expression (1) below has a remarkably improved effect in terms of lifespan characteristics.

A peak appearing around 700 ppm of the 2D $^7$Li MATPASS NMR spectrum is a peak appearing when metals disposed around Li in a crystal structure are solely Ni, and a peak appearing around 550 ppm is a peak appearing when some of the metals disposed around Li in a crystal structure are Co or Al. Meanwhile, when some of the metals disposed around Li are Mn, a peak appears at 700 ppm or more. Therefore, a high peak intensity $I_{550}$ appearing around 550 ppm indicates that Co or Al is highly likely to be disposed around lithium in the crystal structure, and a high peak intensity $I_{700}$ appearing around 700 ppm indicates that nickel is highly likely to be solely disposed around lithium. Therefore, $I_{550}/I_{700}$ may be interpreted as a value corresponding to a ratio of Co disposed around lithium in the crystal structure.

According to research of the present inventors, when the high-nickel positive electrode active material containing 85 mol% to 97 mol% of nickel satisfies conditions of Expression (1) above, a lithium secondary battery has remarkably improved high-temperature lifespan characteristics. Specifically, a lithium secondary battery including the positive electrode active material of which $I_{550}/I_{700}$ in Expression (1) falls within a range of 0.25 to 0.4 has an increased capacity retention rate of 2% to 10%, and a decreased resistance increase rate of 25% to 50% after 200 cycles at 45 °C, compared to lithium secondary batteries including a positive electrode active material of which $I_{550}/I_{700}$ is less than 0.25 or greater than 0.4.

It is not clear why the lifespan characteristics improvement effect is achieved when the conditions in Expression (1) are satisfied. The reason is however assumed to be that a certain proportion of cobalt among the total cobalt included in the positive electrode active material is disposed on the surface of the positive electrode active material to thereby suppress a change in a crystal structure of the positive electrode active material during charging and discharging cycles , and the proportion of cobalt among the metals disposed around lithium in the crystal structure satisfies a specific range to thereby increase the stability of the crystal structure.

Preferably, the positive electrode active material may satisfy Expression (1-1) below. When the positive electrode active material satisfies Expression (1-1), more significant improvement effect of lifespan characteristics is exhibited.

$$\text{Expression (1-1): } 0.30 \leq I_{550}/I_{700} \leq 0.4$$

where, in Expression (1-1), $I_{700}$ and $I_{550}$ are the same as defined in Expression (1).

More preferably, the positive electrode active material may satisfy Expression (1-2) below. When the positive electrode active material satisfies Expression (1-2), more significant improvement effect of lifespan characteristics is exhibited.

$$\text{Expression (1-2): } 0.35 \leq I_{550}/I_{700} \leq 0.4$$

where, in Expression (1-2), $I_{700}$ and $I_{550}$ are the same as defined in Expression (1).

Meanwhile, two peaks appear in the 1D NMR center band spectrum extracted from the NMR spectrum obtained through 2D $^7$Li MATPASS NMR analysis method for the positive electrode active material according to the present invention. Specifically, a first peak appears in a range of 550 ppm to 850 ppm, and a second peak appears in a range of -10 ppm to 10 ppm. This distinctly differs from the case in which an NMR spectrum obtained by one-dimensional (1D) solid-state $^7$Li NMR analysis method shows three or more peaks.

In addition, a full width at half maximum (FWHM) of the peak appearing in the range of 600 ppm to 800 ppm may be 250 ppm or less, preferably 70 ppm to 230 ppm, and more preferably, 100 ppm to 200 ppm, when a spectral analysis (peak deconvolution) is performed on 1D the NMR center band spectrum extracted from the 2D $^7$Li Magic Angle Turning Phase Adjusted Spinning Sideband (MATPASS) NMR spectrum for the positive electrode active material according to the present invention. When the full width at half maximum ($FWHM_{700}$) of the peak appearing in the range of 600 ppm to 800 ppm falls within the range above, NMR peak information about Li surrounded with only Ni may be precisely extracted in the spectral analysis, and thus local structural information about the positive electrode active material may be more accurately identified.

In addition, a full width at half maximum (FWHM) of the peak appearing in the range of 450 ppm to 650 ppm may be 250 ppm or less, preferably 70 ppm to 230 ppm, and more preferably, 100 ppm to 200 ppm, when a spectral analysis (peak deconvolution) is performed on the 1D NMR center band spectrum extracted from the 2D $^7$Li Magic Angle Turning Phase Adjusted Spinning Sideband (MATPASS) NMR spectrum for the positive electrode active material according to the present invention. When the full width at half maximum ($FWHM_{550}$) of the peak appearing in the range of 450 ppm to 650 ppm falls within the range above, NMR peak information about Li partially coordinated with Co or Al may be precisely extracted in the spectral analysis, and thus a local structure of the positive electrode active material may be more accurately identified.

In addition, a full width at half maximum ($FWHM_0$) of the peak appearing in the range of -10 ppm to 10 ppm may be 50 ppm or less, preferably 5 ppm to 45 ppm, and more preferably, 10 ppm to 30 ppm, when a spectral analysis (peak deconvolution) is performed on the 1D NMR center band spectrum extracted from the 2D $^7$Li Magic Angle Turning Phase Adjusted Spinning Sideband (MATPASS) NMR spectrum for the positive electrode active material according to the present invention. When the full width at half maximum (FWHM) of the peak appearing in the range of -10 ppm to 10 ppm falls within the range above, diamagnetic Li peak information may be precisely extracted in the spectral analysis, and thus a local structure of the positive electrode active material may be more accurately identified.

Next, a composition of the positive electrode active material according to the present invention will be described.

The positive electrode active material according to the present invention includes a lithium composite transition metal oxide including nickel, cobalt, manganese, and aluminum.

The positive electrode active material may include 85 mol% or more of nickel, preferably 85 mol% to 97 mol% of nickel, more preferably 85 mol% to 95 mol% of nickel, or more preferably, 90 mol% to 95 mol% of nickel with respect to the total number of moles of metals other than lithium. When an amount of nickel in the positive electrode active material falls within the range mentioned above, excellent capacity characteristics may be achieved.

The positive electrode active material may include 2 mol% to 5 mol% of cobalt, preferably 3 mol% to 4 mol% of cobalt, with respect to the total number of moles of metals other than lithium. When the amount of cobalt is less than 2 mol% in the high-nickel positive electrode active material including 85 mol% or more of nickel, structural stability may decrease, thus long lifespan characteristics may be degraded, and resistance may increase. When the amount of cobalt exceeds 5 mol%, capacity may become poorer.

The positive electrode active material may include 0.5 mol% or more and less than 5 mol% of manganese, preferably, 1 mol% or more and less than 5 mol% of manganese, more preferably, 1 mol% to 3 mol% of manganese, with respect to total number of moles of metals other than lithium. When the amount of manganese falls within the range mentioned above, there is an advantage in that structural stability is excellent, and a catalytic reaction on a surface is suppressed, resulting in suppression of gas generation.

The positive electrode active material may include 0.5 mol% or more and less than 5 mol% of aluminum, preferably, 1 mol% or more and less than 5 mol% of aluminum, more preferably, 1 mol% to 3 mol% of aluminum with respect to the total number of moles of metals other than lithium. When the amount of aluminum exceeds the range mentioned above, capacity deterioration may be caused, and when the amount of aluminum is lower than the range mentioned above, structural stability and surface stability are degraded, resulting in a decrease in lifespan characteristics and an increase in resistance.

Meanwhile, the positive electrode active material may further include a doping element $M^1$, as needed, in addition to nickel, cobalt, manganese, aluminum. The doping element $M^1$ may be, for example, at least one selected from the group consisting of Zr, W, Y, Ba, Ca, Ti, Mg, Ta, and Nb.

Specifically, the positive electrode active material may have a composition represented by [Formula 1] below.

$$[\text{Formula 1}] \qquad Li_aNi_bCo_cMn_dAl_eM^1_fO_2$$

where, in Formula 1,

$M^1$ is at least one selected from the group consisting of Zr, W, Y, Ba, Ca, Ti, Mg, Ta, and Nb, and $0.8 \le a \le 1.2$, $0.85 \le b \le 0.97$, $0.02 \le c \le 0.05$, $0.005 \le d < 0.05$, $0.005 \le e < 0.05$, and $0 \le f \le 0.02$ are satisfied.

Preferably, b may satisfy $0.85 \le b \le 0.95$, or $0.90 \le b \le 0.95$, c may satisfy $0.03 \le c \le 0.05$, or $0.03 \le c \le 0.04$, d may satisfy $0.01 \le d < 0.05$ or $0.01 \le d \le 0.03$, and e may satisfy $0.01 \le e < 0.05$ or $0.01 \le e < 0.03$.

**Preparation method of positive electrode active material**

Next, a method of preparing a positive electrode active material according to the present invention will be described.

A positive electrode active material, having the composition and NMR peak characteristics mentioned above, according to the present invention, may be prepared by adding cobalt included in the positive electrode active material in two steps at a specific molar ratio, rather than adding cobalt all at once.

Specifically, the method of preparing a positive electrode active material according to the present invention includes: a first step of performing a co-precipitation reaction on a transition metal aqueous solution containing nickel ions, cobalt ions, and manganese ions to form a precursor; a second step of mixing the precursor, a lithium raw material and an aluminum raw material and then calcining the resultant mixture to form a lithium composite transition metal oxide; and a third step of mixing the lithium composite transition metal oxide and a cobalt raw material and then performing a heat treatment to prepare a positive electrode active material.

**First step**

First, a transition metal aqueous solution containing nickel ions, cobalt ions, and manganese ions is subjected to a co-precipitation reaction to form a precursor.

The transition metal aqueous solution may be prepared by dissolving a transition metal-containing raw material in a solvent such as water, and for example, may be prepared by dissolving a nickel-containing raw material, a cobalt-containing raw material, or a manganese-containing raw material in water. In addition, as needed, the transition metal aqueous solution may further include a $M^1$ metal raw material.

Meanwhile, the transition metal-containing raw material may be an acetate, carbonate, nitrate, sulfate, halide, sulfide, hydroxide, oxide, or the like of the transition metal.

Specifically, the nickel-containing raw material may be, for example, $NiO$, $NiCO_3 \cdot 2Ni(OH)_2 \cdot 4H_2O$, $Ni-C_2O_2 \cdot 2H_2O$, $Ni(NO_3)_2 \cdot 6H_2O$, $NiSO_4$, $NiSO_4 \cdot 6H_2O$, a nickel halide, or a combination thereof.

The cobalt-containing raw material may be, for example, $CoSO_4$, $Co(OCOCH_3)_2 \cdot 4H_2O$, $Co(NO_3)_2 \cdot 6H_2O$, $CoSO_4 \cdot 7H_2O$, or a combination thereof.

The manganese-containing raw material may be, for example, $Mn_2O_3$, $MnO_2$, $Mn_3O_4$ $MnCO_3$, $Mn(NO_3)_2$, $MnSO_4 \cdot H_2O$, a manganese acetate, a manganese halide, or a combination thereof.

The $M^1$ metal raw material may be, for example, an acetate, carbonate, nitrate, sulfate, halide, sulfide, oxide, or the like of the $M^1$ metal, and $M^1$ may be at least one selected from the group consisting of Zr, W, Y, Ba, Ca, Ti, Mg, Ta, and Nb.

In this case, the amount of each transition metal-containing raw material to be added may be determined in consideration of a molar ratio of the transition metals in a positive electrode active material to be finally produced. For example, in the present invention, the nickel-containing raw material may be added in an amount such that the amount of nickel among the total transition metals becomes 85 mol% or more, preferably 85 mol% to 97 mol%, more preferably 85 mol% to 95 mol%, and even more preferably 90 mol% to 95 mol% in the final positive electrode active material.

Meanwhile, the cobalt-containing raw material may be added in an amount of 0.4-0.5 times the amount of cobalt included in the final positive electrode active material. In the present invention, since only some of cobalt included in the positive electrode active material is added in the co-precipitation reaction and the remaining cobalt is added in the third step to be described later, the ratio of cobalt to lithium coordinated in the crystal structure may be adjusted, compared to the case of adding all cobalt during the co-precipitation reaction.

Meanwhile, an ammonium cation complex forming agent may include at least one compound selected from the group consisting of $NH_4OH$, $(NH_4)_2SO_4$, $NH_4NO_3$, $NH_4Cl$, $CH_3COONH_4$, and $NH_4CO_3$, and may be input, into a reactor, in a solution form in which the compound is dissolved in a solvent. In this case, water or a mixture of water and an organic solvent (specifically, alcohol, etc.) uniformly miscible with water may be used as the solvent.

The basic compound may be at least one compound selected from the group consisting of NaOH, KOH, and $Ca(OH)_2$, and may be input, into the reactor, in a solution form in which the compound is dissolved in the solvent. In this case, water or a mixture of water and an organic solvent (specifically, alcohol, etc.) uniformly miscible with water may be used as the solvent.

The transition metal aqueous solution, the ammonium cation complex forming agent and the basic compound are input into the reactor and stirred as described above, transition metals in the transition metal aqueous solution are coprecipitated, thereby forming precursor particles in a form of a transition metal hydroxide.

In this case, the transition metal aqueous solution, the ammonium cation complex forming agent and the basic compound are input in amounts such that the pH of the reactive solution falls within a desired range.

When the precursor particles are formed by the method mentioned above, a positive electrode active material precursor is separated from the reactive solution, thereby obtaining a positive electrode active material precursor. For example, the positive electrode active material precursor may be separated from the reactive solution by filtering the reaction solution, and then the separated positive electrode active material precursor may be washed and dried to obtain a positive electrode active material precursor. In this case, a process such as grinding and/or sorting may be performed as needed.

**Second step**

Next, the positive electrode active material precursor, a lithium raw material, and an aluminum raw material are mixed and then calcined to prepare a lithium composite transition metal oxide. In this case, a $M^1$ metal-containing raw material may be mixed together and calcined, as needed.

Lithium-containing sulfate, nitrate, acetate, carbonate, oxalate, citrate, halide, hydroxide, oxyhydroxide, etc., may be used as the lithium raw material. For example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof may be used.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, an aluminum halide, or a combination thereof.

The $M^1$ metal raw material may be, for example, an acetate, carbonate, nitrate, sulfate, halide, sulfide, oxide, or the like of the $M^1$ metal, and $M^1$ may be at least one selected from the group consisting of Zr, W, Y, Ba, Ca, Ti, Mg, Ta, and Nb.

Meanwhile, the lithium raw material may be mixed in an amount such that a molar ratio of Li to Ni+Co+Mn+Al in the mixture becomes 1:1 to 1.2:1, preferably, 1:1 to 1.1:1, and more preferably, 1:1 to 1.06:1.When a mixing ratio of the lithium raw material falls within the range mentioned above, a layered crystalline structure of a positive electrode active material is favorably formed, and thus a positive electrode active material having excellent capacity characteristics and structural stability may be prepared.

Meanwhile, the calcination may be performed at a temperature of, for example, 650 °C to 800 °C, preferably 690 °C to 770 °C, and may be performed in an oxygen atmosphere for 5 hours to 35 hours, and preferably, for 8 hours to 20 hours. In the present specification, the oxygen atmosphere means an atmosphere, including an air atmosphere, containing oxygen enough to perform calcination. Particularly, it is preferable to perform calcination in an atmosphere of which an oxygen partial pressure is higher than that of the air atmosphere.

**Third step**

Next, the lithium composite transition metal oxide prepared as previously mentioned, and a cobalt raw material are mixed and then the resultant mixture is subjected to a heat treatment to prepare a positive electrode active material.

In this case, the cobalt raw material may be, for example, $Co(OH)_2$, $CoO$, $CoSO_4$, $Co(NO_3)_2$, $CoCO_3$, $Co_3(PO4)_2$, etc.

Meanwhile, the cobalt raw material is mixed in an amount such that a ratio of number of moles of cobalt included in the cobalt raw material in the third step to number of moles of cobalt included in the precursor in the first step is 1 to 1.5, preferably, 1 to 1.3, and more preferably 1 to 1.2. When the ratio of number of moles of cobalt introduced in the third step to number of moles of cobalt introduced in the first step falls within the range mentioned above, a ratio at which lithium and cobalt are coordinated in the crystalline structure is controlled to thereby obtain a positive electrode active material satisfying Expression (1).

In addition, the heat treatment temperature may be 600 °C to 750 °C, preferably, 600 °C to 700 °C. When the heat treatment temperature falls within the range mentioned above, a ratio at which lithium and cobalt are coordinated in the crystalline structure is controlled to thereby obtain a positive electrode active material satisfying Expression (1). Depending on the heat treatment temperature, a diffusion degree of Co elements varies, and accordingly the ratio at which lithium are cobalt are coordinated in the crystalline structure varies as well. Therefore, in order to properly control the Co-coordinated lithium ratio, the heat treatment temperature should be properly controlled. When the heat treatment temperature is less than 600 °C, an amount of Co penetrating into positive electrode active material secondary particles is too small. When the heat treatment temperature exceeds 750 °C, an amount of Co diffused into the crystal lattice is too high, thus making it difficult to obtain a positive electrode active material satisfying Expression (1).

As mentioned above, some of the total cobalt included in the positive electrode active material is added in a co-precipitation reaction for forming the precursor, the remaining cobalt is added after forming the lithium composite transition metal oxide, and the heat treatment is performed at an appropriate temperature, thereby preparing the positive electrode active material satisfying Expression (1).

In addition, although not necessary, a coating layer forming step may be additionally performed after the third step, if necessary. The coating layer forming step may be performed by a method of mixing the positive electrode active material and the coating raw material and then performing a heat treatment.

The coating raw material may be an acetate, a carbonate, a nitrate, a sulfate, a halide, a sulfide, an oxide, or the like, which contains a coating element. The coating element may be at least one selected from the group consisting of Al, Ti, W, B, F, P, Mg, Ni, Co, Fe, Cr, V, Cu, Ca, Zn, Zr, Nb, Mo, Sr, Sb, Bi, Si and S.

In this case, the mixing may be performed through solid-state mixing or liquid-state mixing, and the heat treatment may be performed at a suitable temperature depending on the coating raw material. For example, the heat treatment of the coating process may be performed at a temperature of 200 °C to 700 °C, or 300 °C to 600 °C, but the heat treatment temperature is not limited thereto.

**Positive electrode**

Next, a positive electrode according to the present invention will be described.

A positive electrode according to the present invention includes a positive electrode active material layer including the positive electrode active material according to the present invention. Specifically, the positive electrode includes a positive electrode current collector, and a positive electrode active material layer formed on the positive electrode current collector and including the positive electrode active material.

In the positive electrode, the positive electrode current collector is not particularly limited as long as having conductivity without causing a chemical change in the battery, and for example, stainless steel, aluminum, nickel, titanium, or calcined carbon, or aluminum or stainless steel surface-treated with carbon, nickel, titanium, silver, etc., may be used. In addition, the positive electrode current collector may commonly have a thickness of 3 $\mu$m to 500 $\mu$m and may have fine irregularities on the surface thereof to improve the adhesion of the positive electrode active material. For example, the positive electrode current collector may be used in various forms such as films, foils, nets, porous bodies, foams, non-woven fabrics.

In addition, the positive electrode active material layer may include a conductive material and a binder along with the previously described positive electrode active material.

The conductive material is used to impart conductivity to an electrode, and any conductive material may be used as the conductive material without particular limitation as long as having an electron conductivity without causing chemical changes in a battery. Specific examples of the conductive material may include: graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive material may be commonly included in an amount of 1 wt% to 30 wt%, preferably, 1 wt% to 20 wt%, and more preferably 1 wt% to 10 wt% with respect to the total weight of the positive electrode active material layer.

The binder serves to improve adhesion of the positive electrode active material particles and adhesion between the positive electrode active material and the positive electrode current collector. Specific examples of the binder may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), fluororubber, or various copolymers thereof, and any one thereof or a mixture of two or more thereof may be used. The binder may be included in an amount of 1 wt% to 30 wt%, preferably, 1 wt% to 20 wt%, and more preferably 1 wt% to 10 wt% with respect to the total weight of the positive electrode active material layer.

The positive electrode may be prepared according to a typical method of preparing a positive electrode. For example, the positive electrode may be prepared by mixing the positive electrode active material, the binder, and/or the conductive material in a solvent to form a positive electrode slurry, applying the positive electrode slurry on the positive electrode current collector, and then drying and rolling the resultant. In this case, the types and amounts of the positive electrode active material, the binder, the conductive material are the same as those previously described.

The solvent may be a solvent typically used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used is sufficient if the solvent dissolves or disperses the positive electrode active material, the conductive material, and the binder in consideration of an applied thickness of the slurry and production yield, and has a viscosity at which excellent thickness uniformity can be ensured when applied later for the preparation of the positive electrode.

As another method, the positive electrode may be prepared by casting the positive electrode slurry onto a separate support and laminating a film peeled off from the support on the positive electrode current collector.

## Lithium secondary battery

Next, a lithium secondary battery according to the present invention will be described.

The lithium secondary battery of the present invention includes the positive electrode according to the present invention. Specifically, the lithium secondary battery includes a positive electrode, a negative electrode disposed facing the positive electrode, a separator disposed between the positive electrode and the negative electrode, and an electrolyte, and the positive electrode is as described above. In addition, the lithium secondary battery may optionally further include a battery container accommodating a battery assembly of the positive electrode, the negative electrode, and the separator, and a sealing member sealing the battery container.

In the lithium secondary battery, the negative electrode includes a negative electrode current collector, and a negative electrode active material layer disposed on the negative electrode current collector.

The negative electrode current collector is not particularly limited as long as having high conductivity without causing chemical changes in the battery, and for example, copper, stainless steel, aluminum, nickel, titanium, calcined carbon, surface-treated copper or stainless steel with carbon, nickel, titanium, silver, an aluminum-cadmium alloy, etc., may be used. In addition, the negative electrode current collector may commonly have a thickness of 3 $\mu$m to 500 $\mu$m, and, may have, like the positive electrode current collector, fine irregularities on the surface thereof to improve the adhesion of the negative electrode active materials. For example, the negative electrode current collector may be used in various forms, such as films, foils, nets, porous bodies, foams, non-woven fabrics.

The negative electrode active material layer optionally includes a binder and a conductive material in addition to the negative electrode active material.

As the negative electrode active material, a compound capable of reversible intercalation and deintercalation of lithium may be used. Specific examples of the negative electrode active material may include: a carbonaceous material such as artificial graphite, natural graphite, a graphitized carbon fiber, or an amorphous carbon; a metallic material, alloyable with lithium, such as Si, Al, Sn, Pb, Zn, Bi, In, Mg, Ga, Cd, Si alloy, a Sn alloy, or an Al alloy; a metal oxide, which may be doped or undoped with lithium, such as $SiO_\beta(0 <\beta< 2)$, $SnO_2$, vanadium oxide, or lithium vanadium oxide; a composite, including the metallic **material** and the carbonaceous material, such as a Si-C composite or a Sn-C composite, and any one thereof or a mixture of two or more thereof may be used.

In addition, a metal lithium thin film may be used as the negative electrode active material. Also, both low crystalline carbon and high crystalline carbon may be used as the carbonaceous material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch derived cokes.

The conductive material is used to impart conductivity to an electrode, and any conductive material having electron conductivity without causing chemical changes in the battery may be used without any particular limitation. Specific examples of the conductive material may include: graphite such as natural graphite or artificial graphite; carbon-based materials such as carbon black, acetylene black, Ketjen black, channel black, furnace black, lamp black, thermal black, carbon fibers, and carbon nanotubes; powders or fibers of metals such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive material may be included typically in an amount of 1 wt% to 30 wt%, preferably in an amount of 1 wt% to 20 wt%, and more preferably in an amount of 1 wt% to 10 wt% with respect to a total weight of the negative electrode active material layer.

The binder serves to improve an adhesion of the negative electrode active material particles and an adhesion between the negative electrode active material and the negative electrode current collector. Specific examples of the binder may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM) rubber, a sulfonated-EPDM, a styrene-butadiene rubber (SBR), fluororubber, various copolymers thereof, and the like, and any one thereof or a mixture of two or more thereof may be used. The binder may be included typically in an amount of 1 wt% to 30 wt%, preferably in an amount of 1 wt% to 20 wt%, and more preferably in an amount of 1 wt% to 10 wt% with respect to the total weight of the negative electrode active material layer.

The negative electrode active material layer may be prepared, for example, by applying a negative electrode slurry, which includes the negative electrode active material and optionally includes the binder and the conductive material, on the negative electrode current collector, and drying the resultant, or by casting the negative electrode slurry onto a separate support, and then laminating a film peeled off from the support on the negative electrode current collector.

Meanwhile, in the lithium secondary battery, the separator separates the negative electrode and the positive electrode, and provides a movement pathway of lithium ions, any separator, commonly used in a lithium secondary battery as a separator, may be used without any particular limitation, and particularly, it is desirable to use a separator having high moisture-retention ability for an electrolyte solution as well as low resistance to the transfer of electrolyte ions. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a conventional porous nonwoven fabric, for example, a nonwoven fabric formed of high-melting-point glass fibers or polyethylene terephthalate fibers may be used. In addition, a coated separator including a ceramic component or a polymer material may be used to secure heat resistance or mechanical strength, and the separator having a single layer or multilayer structure may be optionally used.

In addition, examples of the electrolyte used in the present invention may include an organic-based liquid electrolyte, an inorganic-based liquid electrolyte, a solid polymer electrolyte, a gel-type polymer electrolyte, a solid inorganic electrolyte, or a molten-type inorganic electrolyte which can be used in production of a lithium secondary battery, but the electrolyte is not limited thereto.

Specifically, the electrolyte may include an organic electrolyte and a lithium salt.

Any organic solvent, which may serve as a medium through which ions involved in an electrochemical reaction of the battery may move, may be used as the organic solvent without any particular limitation. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among them, the carbonate-based solvent is preferable, and a mixture of cyclic carbonates (for example, ethylene carbonate or propylene carbonate, etc.) having high ionic conductivity and high dielectric constant and thereby increasing the charging and discharging performance of the battery, and a linear carbonate-based compound having low viscosity (for example, ethyl methyl carbonate, dimethyl carbonate, diethyl carbonate, etc.) is more preferable.

Any compound capable of providing lithium ions used in a lithium secondary battery may be used as the lithium salt without any particular limitation. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used as the lithium salt. The lithium salt may be favorably used in a concentration range of 0.1 M to 5.0 M, and preferably, 0.1 M to 3.0 M. When the concentration of the lithium salt falls within the above-mentioned range, the electrolyte may have suitable conductivity and viscosity, and thus excellent performance of the electrolyte may be obtained and lithium ions may effectively move.

For the purpose of improving the lifespan characteristics of the battery, suppressing the reduction in battery capacity, improving discharge capacity of the battery, and the like, the electrolyte may further include an additive in addition to the electrolyte components. For example, a haloalkylene carbonate-based compound such as difluoroethylene carbonate, pyridine, triethylphosphite, triethanolamine, cyclic ether, ethylene diamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, or aluminum trichloride may be used alone or in a mixture thereof as the additive, but the additive is not limited thereto. The additive may be included in an amount of 0.1 wt% to 10 wt%, and preferably, 0.1 wt% to 5 wt% with respect to a total weight of the electrolyte.

As described above, a lithium secondary battery including the positive electrode active material according to the present invention stably exhibits excellent discharge capacity, output characteristics and capacity retention rate, and thus is useful in a field of portable apparatuses such as mobile phones, laptop computers, digital cameras, and electric vehicles such as hybrid electric vehicles (HEVs), and the like.

Accordingly, according to another embodiment of the present invention, provided are a battery module including the lithium secondary battery as a unit cell, and a battery pack including the same.

The battery module or the battery pack may be used as a power supply of at least one medium and large apparatus in a power tool; an electric vehicle including an electric vehicle (EV), a hybrid electric vehicle, and a plug-in hybrid electric vehicle (PHEV); or a system for power storage.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Example 1**

A transition metal solution, in which $NiSO_4$, $CoSO_4$, and $MnSO_4$ were mixed such that a molar ratio of Ni: Co: Mn was 92:2:2, an ammonium hydroxide solution, and a sodium hydroxide solution were put into a coprecipitation reactor, and the resultant mixture was subjected to a coprecipitation reaction to form a precursor. Particles of the precursor were separated, washed, and then dried to prepare a precursor.

The precursor synthesized by the coprecipitation reaction, LiOH, and aluminum hydroxide were mixed such that a molar ratio of Ni+Co+Mn: Al: Li was 96:2:98, and the resultant mixture was calcined for 12 hours in an oxygen atmosphere at 750 °C to prepare a lithium composite metal oxide.

The lithium composite metal oxide and $Co(OH)_2$ were mixed in an amount such that a molar ratio of Ni : Co : Mn : Al is 92:4:2:2, and then a heat treatment was performed for 8 hours at 650 °C to prepare a positive electrode active material.

## Example 2

A transition metal solution, in which $NiSO_4$, $CoSO_4$, and $MnSO_4$ were mixed such that a molar ratio of Ni: Co: Mn was 92:2:2, an ammonium hydroxide solution, and a sodium hydroxide solution were put into a coprecipitation reactor, and the resultant mixture was subjected to a coprecipitation reaction to form a precursor. The precursor particles were separated, washed, and then dried to prepare a precursor.

The precursor synthesized by the coprecipitation reaction, LiOH, and aluminum hydroxide were mixed such that a molar ratio of Ni+Co+Mn: Al: Li was 96:2:98, and the resultant mixture was calcined for 12 hours in an oxygen atmosphere at 750 °C to prepare a lithium composite metal oxide.

The lithium composite metal oxide and $Co(OH)_2$ were mixed in an amount such that a molar ratio of Ni : Co : Mn : Al was 92:4:2:2, and a heat treatment was performed for 8 hours at 600 °C to prepare a positive electrode active material.

## Comparative Example 1

A transition metal solution, in which $NiSO_4$, $CoSO_4$, and $MnSO_4$ were mixed such that a molar ratio of Ni: Co: Mn was 92:4:2, an ammonium hydroxide solution, and a sodium hydroxide solution were put into a coprecipitation reactor, and the resultant mixture was subjected to a coprecipitation reaction to form a precursor. The precursor particles were separated, washed, and then dried to prepare a precursor.

The precursor synthesized by the coprecipitation reaction, LiOH, and aluminum hydroxide were mixed such that a molar ratio of Ni+Co+Mn: Al: Li was 98:2:100, and the resultant mixture was calcined for 12 hours in an oxygen atmosphere at 750 °C to prepare a positive electrode active material.

## Comparative Example 2

A transition metal solution, in which $NiSO_4$, and $MnSO_4$ were mixed such that a molar ratio of Ni: Mn was 92:2, an ammonium hydroxide solution, and a sodium hydroxide solution were put into a coprecipitation reactor, and the resultant mixture was subjected to a coprecipitation reaction to form a precursor. The precursor particles were separated, washed, and then dried to prepare a precursor.

The precursor synthesized by the coprecipitation reaction, LiOH, and aluminum hydroxide were mixed such that a molar ratio of Ni+Mn: Al: Li is 94:2:96, and the resultant mixture was calcined for 12 hours in an oxygen atmosphere at 750 °C to prepare a lithium composite metal oxide.

The lithium composite metal oxide and $Co(OH)_2$ were mixed in an amount such that a molar ratio of Ni : Co : Mn : Al was 92:4:2:2, and then a heat treatment was performed for 8 hours at 650 °C to prepare a positive electrode active material.

## Experimental Example 1: NMR spectrum spectral analysis

2D $^7$Li MATPASS NMR spectra were obtained for the positive electrode active materials prepared according to Examples 1 and 2, and Comparative Examples 1 and 2 and 1D NMR center band spectra were extracted.

FIG. 1 show 1D NMR center band spectra extracted from 2D $^7$Li MATPASS NMR spectra for the positive electrode active material according to Examples 1 and 2, and Comparative Examples 1 and 2. In addition, for comparison, 1D Hahn-echo MAS NMR spectra for the positive electrode active materials according to Example 1 and Comparative Example 1 were measured, and the measurement results are shown in FIG. 2.

With reference to FIGS. 1 and 2, it can be seen that the 1D NMR center band spectra extracted from NMR spectra obtained with 2D $^7$Li magic angle turning phase adjusted spinning sideband (MATPASS) analysis method has only two peaks appearing in a region of 550 ppm to 850 ppm and in a region of -10 ppm to 10 ppm, whereas much more peaks appear in 1D-Hahn-echo MAS NMR spectra as a result of a magic angle spinning, and there is an overlap between a main peak and a spinning side band(represented by *) thus generated.

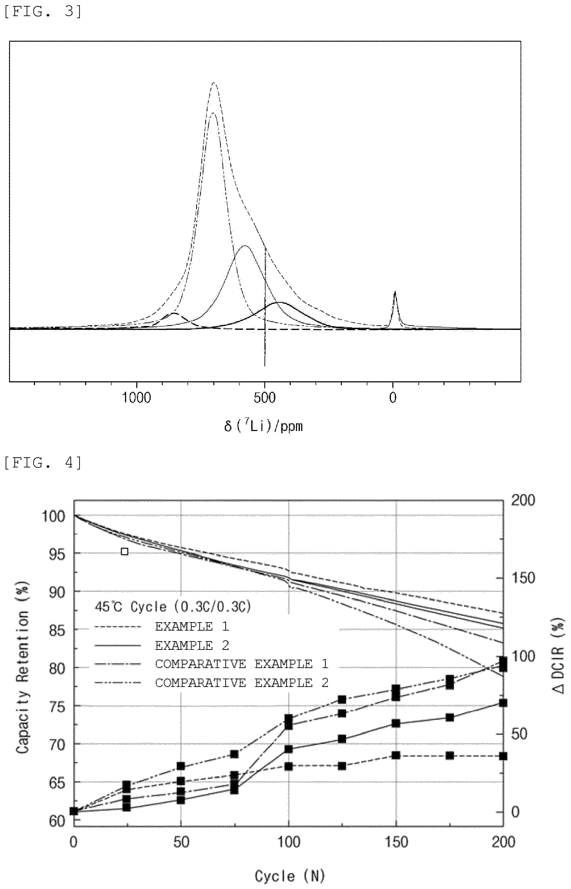

Sequentially, $I_{550}/I_{700}$, a full width at half maximum ($FWHM_{700}$)of a peak appearing in a range of 600 ppm to 800 ppm, a full width at half maximum ($FWHM_{550}$)of a peak appearing in a range of 450 ppm to 650 ppm, and a full width at half maximum ($FWHM_0$)of a peak appearing in a range of -10 ppm to 10 ppm of the positive electrode active materials according to Examples 1 and 2, and Comparative Examples 1 and 2 were measured through a spectral analysis of 1D NMR center band spectra extracted from 2D $^7$Li MATPASS (Magic Angle Turning-Phase Adjusted Spinning Sideband) NMR spectra obtained in the above process. The measurement results were listed in [Table 1]. In addition, FIG. 3 shows the results of the spectral analysis of 1D NMR center band spectra extracted from 2D $^7$Li MATPASS NMR spectra.

Meanwhile, the measurement conditions and the spectral analysis conditions of the 2D $^7$Li MATPASS NMR spectra are the same as described above.

Table 1

| | $I_{550}/I_{700}$ | $FWHM_{700}$ | $FWHM_{550}$ | $FWHM_0$ |
|---|---|---|---|---|
| Example 1 | 0.387 | 124 | 181.8 | 20.1 |
| Example 2 | 0.374 | 119 | 150 | 14 |
| Comparative Example 1 | 0.424 | 131 | 138 | 16 |
| Comparative Example 2 | 0.241 | 111 | 186 | 16 |

**Experimental Example 2: high-temperature lifespan characteristics evaluation**

Positive electrode active materials prepared according to Examples 1 and 2, and Comparative Examples 1 and 2, a conductive material (Super C65)and a PVDF binder were mixed in N-methylpyrrolidone at a weight ratio of 96.5:1.5:2 to prepare a positive electrode slurry. The positive electrode slurry was applied on one surface of an aluminum current collector, and the slurry was dried and then rolled to prepare a positive electrode.

A mixture of natural graphite(GT, made by Zichen Technology Co.,Ltd) and artificial graphite (AGP8, made by BTR Co.,Ltd) as a negative electrode active material, Super-C65 (made by Timcal Ltd) as a conductive material, a SBR binder (BM-L302 made by ZEON Corporation),and an additive (Daicel 2200, Daicel Chemical Industry Co.,Ltd) were mixed in water at a weight ratio of 95.6:1:2.3:1.1 to prepare a negative electrode slurry. The negative electrode slurry was applied on one surface of a copper current collector, then dried, and then the slurry was rolled to prepare a negative electrode.

An electrode assembly is prepared by disposing a separator between the positive electrode and the negative electrode, then the electrode assembly was disposed in a battery case, and then an electrolyte solution was injected into the case to prepare a lithium secondary battery. The electrolyte solution was prepared by dissolving $LiPF_6$ at a concentration of 1.0 M in a mixed organic solvent in which ethylene carbonate/ dimethyl carbonate/ diethyl carbonate were mixed at a volume ratio of 1:2:1, and then by adding 2 wt% of vinylene carbonate (VC).

The lifespan characteristics of the secondary batteries produced above were evaluated through measurement of the capacity retention rate and the resistance increase rate after performing charging and discharging for 200 cycles each of which involves charging the batteries in a CC-CV mode at a rate of 0.3 C until reaching 4.25 V and discharging the batteries at a constant current of 0.3 C until reaching 2.5 V. The measurement results are shown in FIG. 4.

With reference to FIG. 4, it can be seen that the lithium secondary batteries using the positive electrode active materials according to Examples 1 and 2, in which $I_{550}/I_{700}$ falls within 0.3 to 0.4, exhibit more excellent lifespan characteristics than the lithium secondary battery using the positive electrode active material according to Comparative Example 1 in which $I_{550}/I_{700}$ is more than 0.4, and the lithium secondary battery using the positive electrode active material according to Comparative Example 2 in which $I_{550}/I_{700}$ is less than 0.25.

**Claims**

1. A positive electrode active material comprising a lithium composite metal oxide including nickel, cobalt, manganese, and aluminum,

   wherein the positive electrode active material includes 85 mol% to 97 mol% of nickel and 2 mol% to 5 mol% of cobalt, with respect to a total number of moles of metals other than lithium, and satisfies Expression (1) below,

$$\text{Expression (1): } 0.25 \leq I_{550}/I_{700} \leq 0.4$$

   where, in Expression (1), $I_{700}$ and $I_{550}$ are respectively a maximum value of a peak intensity appearing in a range of 600 ppm to 800 ppm and a maximum value of a peak intensity appearing in a range of 450 ppm to 650 ppm when a spectral analysis (peak deconvolution) is performed on a 1D NMR center band spectrum extracted from a 2D $^7$Li Magic Angle Turning Phase Adjusted Spinning Sideband (MATPASS) NMR spectrum of the positive electrode active material.

2.  The positive electrode active material of claim 1,
    wherein the 1D NMR center band spectrum extracted from 2D $^7$Li MATPASS NMR spectrum of the positive electrode active material has a first peak appearing in a range of 550 ppm to 850 ppm, and a second peak appearing in a range of -10 ppm to 10 ppm.

3.  The positive electrode active material of claim 1,

    wherein the positive electrode active material satisfies Expression (1-1).

$$\text{Expression (1-1)}: 0.30 \leq I_{550}/I_{700} \leq 0.4$$

where, in Expression (1-1), $I_{700}$ and $I_{550}$ are respectively a maximum value of a peak intensity appearing in a range of 600 ppm to 800 ppm and a maximum value of a peak intensity appearing in a range of 450 ppm to 650 ppm when a spectral analysis (peak deconvolution) is performed on a 1D NMR center band spectrum extracted from a 2D $^7$Li Magic Angle Turning Phase Adjusted Spinning Sideband (MATPASS) NMR spectrum of the positive electrode active material.

4.  The positive electrode active material of claim 1,
    wherein a full width at half maximum ($FWHM_{700}$) of the peak appearing in the range of 600 ppm to 800 ppm is 250 ppm or less when a spectral analysis (peak deconvolution) is performed on a 1D NMR center band spectrum extracted from a 2D $^7$Li Magic Angle Turning Phase Adjusted Spinning Sideband (MATPASS) NMR spectrum of the positive electrode active material.

5.  The positive electrode active material of claim 1,
    wherein a full width at half maximum ($FWHM_{550}$) of a peak appearing in a range of 450 ppm to 650 ppm is 250 ppm or less when a spectral analysis (peak deconvolution) is performed on a 1D NMR center band spectrum extracted from a 2D $^7$Li Magic Angle Turning Phase Adjusted Spinning Sideband (MATPASS) NMR spectrum of the positive electrode active material.

6.  The positive electrode active material of claim 1,
    wherein a full width at half maximum ($FWHM_{0}$) of a peak appearing in a range of -10 ppm to 10 ppm is 50 ppm or less when a spectral analysis (peak deconvolution) is performed on a 1D NMR center band spectrum extracted from a 2D $^7$Li Magic Angle Turning Phase Adjusted Spinning Sideband (MATPASS) NMR spectrum of the positive electrode active material.

7.  The positive electrode active material of claim 1,
    wherein the positive electrode active material includes the nickel in an amount ranging from 85 mol% to 95 mol% with respect to the total number of moles of metals other than lithium.

8.  The positive electrode active material of claim 1,
    wherein the positive electrode active material includes the nickel in an amount ranging from 90 mol% to 95 mol% with respect to the total number of moles of metals other than lithium.

9.  The positive electrode active material of claim 1,
    wherein the positive electrode active material includes the manganese in an amount ranging from 0.5 mol% to 5 mol%, and the aluminum in an amount ranging from 0.5 mol% to 5 mol%, with respect to the total number of moles of metals other than lithium.

10. The positive electrode active material of claim 1,

    wherein, the positive electrode active material has a composition represented by [Formula 1].

    [Formula 1]  $Li_a Ni_b Co_c Mn_d Al_e M^1_f O_2$

where, in [Formula 1], $M^1$ is at least one selected from the group consisting of Zr, W, Y, Ba, Ca, Ti, Mg, Ta, and Nb, and $0.8 \leq a \leq 1.2$, $0.85 \leq b \leq 0.97$, $0.02 \leq c \leq 0.05$, $0.005 \leq d < 0.05$, $0.005 \leq e < 0.05$, and $0 \leq f \leq 0.02$ are satisfied.

11. A method of preparing a positive electrode active material, the method comprising:

a first step of performing a co-precipitation reaction on a transition metal aqueous solution containing nickel ions, cobalt ions, and manganese ions to form a precursor;

a second step of mixing the precursor, a lithium raw material, and an aluminum raw material and then calcining a resultant mixture to form a lithium composite metal oxide; and

a third step of mixing the lithium composite transition metal oxide and a cobalt raw material, and then performing a heat treatment to prepare the positive electrode active material.

12. The method of claim 11,
wherein a ratio of a number of moles of cobalt included the cobalt raw material in the third step to a number of moles of cobalt included in the precursor in the first step ranges from 1 to 1.5.

13. The method of claim 11,
wherein a temperature of the heat treatment in the third step is from 600 °C to 750 °C.

14. A positive electrode comprising the positive electrode active material set forth as in any of claims 1 to 10.

15. A lithium secondary battery comprising the positive electrode of claim 14.

[FIG. 1]

$\delta(^{7}Li)/ppm$

[FIG. 2]

$\delta(^{7}Li)/ppm$

[FIG. 3]

δ(⁷Li)/ppm

[FIG. 4]

Cycle (N)

## INTERNATIONAL SEARCH REPORT

| International application No. |
| --- |
| **PCT/KR2023/004752** |

**A. CLASSIFICATION OF SUBJECT MATTER**

**H01M 4/525**(2010.01)i; **H01M 4/505**(2010.01)i; **C01G 53/00**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/525(2010.01); H01M 10/052(2010.01); H01M 10/0525(2010.01); H01M 4/131(2010.01); H01M 4/485(2010.01); H01M 4/505(2010.01); H01M 4/88(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 니켈(nickel), 코발트(cobalt), 망간 (manganese), 알루미늄(aluminium), 공침(coprecipitation), Li NMR

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2020-0090661 A (LG CHEM, LTD.) 29 July 2020 (2020-07-29) See paragraphs [0049], [0080]-[0083], [0092] and [0105]; example 1; and claim 1. | 11-13 |
| A | | 1-10,14,15 |
| A | US 2010-0227221 A1 (CHANG, Sung-Kyun et al.) 09 September 2010 (2010-09-09) See entire document. | 1-15 |
| A | KR 10-2019-0060705 A (LG CHEM, LTD.) 03 June 2019 (2019-06-03) See entire document. | 1-15 |
| A | KR 10-2021-0138991 A (LG CHEM, LTD.) 22 November 2021 (2021-11-22) See entire document. | 1-15 |
| A | KR 10-2013-0063868 A (SAMSUNG SDI CO., LTD.) 17 June 2013 (2013-06-17) See entire document. | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 July 2023** | **07 July 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/004752**

| Patent document cited in search report | | | Publication date (day/month/year) | Patent family member(s) | | | Publication date (day/month/year) |
|---|---|---|---|---|---|---|---|
| KR | 10-2020-0090661 | A | 29 July 2020 | CN | 110140242 | A | 16 August 2019 |
| | | | | CN | 110140242 | B | 27 May 2022 |
| | | | | KR | 10-2018-0076647 | A | 06 July 2018 |
| | | | | KR | 10-2207105 | B1 | 25 January 2021 |
| | | | | WO | 2018-124781 | A1 | 05 July 2018 |
| US | 2010-0227221 | A1 | 09 September 2010 | CN | 101443273 | A | 27 May 2009 |
| | | | | CN | 101443273 | B | 07 May 2014 |
| | | | | JP | 2009-526735 | A | 23 July 2009 |
| | | | | JP | 5405126 | B2 | 05 February 2014 |
| | | | | KR | 10-0873273 | B1 | 11 December 2008 |
| | | | | KR | 10-1382386 | B1 | 10 April 2014 |
| | | | | KR | 10-2007-0082900 | A | 22 August 2007 |
| | | | | KR | 10-2008-0083237 | A | 17 September 2008 |
| | | | | KR | 10-2010-0041721 | A | 22 April 2010 |
| | | | | TW | 200736165 | A | 01 October 2007 |
| | | | | TW | I352066 | B | 11 November 2011 |
| | | | | US | 8895190 | B2 | 25 November 2014 |
| | | | | WO | 2007-094644 | A1 | 23 August 2007 |
| KR | 10-2019-0060705 | A | 03 June 2019 | CN | 110650923 | A | 03 January 2020 |
| | | | | CN | 110650923 | B | 08 March 2022 |
| | | | | EP | 3611132 | A2 | 19 February 2020 |
| | | | | EP | 3611132 | A4 | 22 July 2020 |
| | | | | EP | 3611132 | B1 | 01 September 2021 |
| | | | | JP | 2021-501980 | A | 21 January 2021 |
| | | | | JP | 2022-111183 | A | 29 July 2022 |
| | | | | KR | 10-2177799 | B1 | 12 November 2020 |
| | | | | US | 2020-0350554 | A1 | 05 November 2020 |
| | | | | WO | 2019-103522 | A2 | 31 May 2019 |
| | | | | WO | 2019-103522 | A3 | 18 July 2019 |
| KR | 10-2021-0138991 | A | 22 November 2021 | None | | | |
| KR | 10-2013-0063868 | A | 17 June 2013 | CN | 103151511 | A | 12 June 2013 |
| | | | | CN | 108281650 | A | 13 July 2018 |
| | | | | EP | 2602849 | A2 | 12 June 2013 |
| | | | | EP | 2602849 | A3 | 01 April 2015 |
| | | | | EP | 2602849 | B1 | 01 January 2020 |
| | | | | JP | 2013-120752 | A | 17 June 2013 |
| | | | | JP | 6265520 | B2 | 24 January 2018 |
| | | | | KR | 10-1689212 | B1 | 26 December 2016 |
| | | | | US | 2013-0149608 | A1 | 13 June 2013 |
| | | | | US | 9660291 | B2 | 23 May 2017 |

Form PCT/ISA/210 (patent family annex) (July 2022)

**EP 4 489 132 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220043660